Europäisches Patentamt

European Patent Office

Office européen des brevets

(11) Numéro de publication: **0 403 388**
**A1**

(12) **DEMANDE DE BREVET EUROPEEN**

(21) Numéro de dépôt: 90401655.7

(51) Int. Cl.5: **B60J 7/05**

(22) Date de dépôt: **14.06.90**

(30) Priorité: **15.06.89 FR 8907941**

(43) Date de publication de la demande:
**19.12.90 Bulletin 90/51**

(84) Etats contractants désignés:
**DE FR GB IT NL**

(71) Demandeur: **FRANCE DESIGN Henri Heuliez**

**F-79140 Le Pin(FR)**

(72) Inventeur: **Cheron, Christian**
**Le Chêne Ecouflant**
**F-49000 Angers(FR)**
Inventeur: **Gaillard, de**
**2, rue de la Motte**
**F-85390 Mouilleron en Pareds(FR)**

(74) Mandataire: **Rodhain, Claude et al**
**Cabinet Claude Rodhain 30, rue la Boétie**
**F-75008 Paris(FR)**

(54) Mécanisme d'ouverture, de fermeture et d'entrebaillement d'un panneau mobile par rapport à une surface fixe, notamment pour toit ouvrant d'un véhicule automobile.

(57) L'invention concerne un mécanisme d'ouverture, de fermeture et d'entrebâillement d'un panneau mobile par rapport à une surface fixe notamment pour toit ouvrant de véhicule automobile, du type comportant un support (3) sur lequel est fixé le panneau mobile et des moyens de guidage (5, 6, 7) et d'articulation du support (3) mobiles en translation dans une glissière (2) fixée à la surface fixe.

Il est remarquable par sa compacité, sa simplicité et est adapté pour se poser sur le dessus du pavillon, notamment dans une solution seconde monte.

Selon l'invention ladite glissière (2) est disposée sur le dessus de la surface fixe (9) et présente, à son extrémité avant un tronçon incliné (2D) et en ce que ledit support (3) est monté à articulation à son extrémité avant sur un axe (4), mobile en translation dans la glissière (2), la partie terminale dudit tronçon incliné (2D) servant d'appui à l'axe (4) notamment en position entrebâillée du panneau mobile (1).

FIG.5

## MECANISME D'OUVERTURE, DE FERMETURE ET D'ENTREBAILLEMENT D'UN PANNEAU MOBILE PAR RAPPORT A UNE SURFACE FIXE, NOTAMMENT POUR TOIT OUVRANT D'UN VEHICULE AUTOMOBILE.

L'invention concerne un mécanisme d'ouverture, de fermeture et d'entrebâillement d'une surface par rapport à une autre, ce mécanisme permettant l'ouverture et la fermeture par coulissement de la surface mobile au-dessus de la surface fixe, une ouverture partielle, dite d'entrebâillement, résultant du pivotement de la surface mobile par rapport à la surface fixe. Ce mécanisme est en particulier destiné à un toit ouvrant de véhicule automobile, le mécanisme étant posé à l'extérieur de l'habitacle du véhicule.

On connaît déjà des mécanismes d'actionnement de toit ouvrant permettant l'ouverture du toit par entrebâillement et coulissement d'un panneau mobile, le panneau mobile coulissant au-dessous du pavillon du véhicule. Cependant dans ces dispositifs connus, l'ensemble du mécanisme est monté à l'intérieur de l'habitacle du véhicule, ce qui diminue d'autant le volume utilisable de celui-ci, et notamment la hauteur disponible au niveau du conducteur et du passager. Ces mécanismes connus sont mal adaptés aux véhicules dont l'habitacle a un volume réduit.

On connaît aussi des mécanismes d'ouverture de toit permettant simplement l'ouverture du toit par coulissement du panneau mobile au-dessus du pavillon. Cependant, ce type de mécanisme ne permet pas l'entrebaîllement du panneau mobile, contrairement au mécanisme cité ci-dessus. De façon générale, ces mécanismes comportent deux rails posés sur le dessus du pavillon de part et d'autre de l'ouverture aménagée dans celui-ci, les rails guidant un jeu de galets portant le panneau mobile et l'entraînant en translation.

Pour les véhicules n'étant pas équipés en version de base, d'un toit ouvrant, il est avantageux de pouvoir disposer d'un mécanisme d'actionnement de toit ouvrant, notamment dans le cas d'une solution seconde monte, l'ensemble du mécanisme pouvant être posé au-dessus du pavillon de façon simple et permettant l'entrebâillement et/ou le coulissement du panneau mobile au-dessus du pavillon, c,est à dire, finalement, offrant les mêmes fonctionnalités que les panneaux entrebâillants et coulissants tels que divulgués dans le document DE-C-3 629 118, sans pour autant diminuer le volume de l'habitacle du véhicule.

Par ailleurs, afin de préserver un bon coefficient de pénétration du véhicule, il est nécessaire que le mécanisme d'actionnement du panneau mobile soit d'un encombrement le plus réduit possible, notamment dans la dimension de l'épaisseur du panneau mobile.

Dans l'art antérieur, la compacité du mécanisme d'actionnement s'oppose aux fonctionnalités intéressantes d'entrebâillement et de coulissement du panneau mobile au-dessus du pavillon.

Par conséquent, l'objet de l'invention est de proposer un mécanisme nouveau d'actionnement d'un panneau mobile par rapport à une surface fixe remarquable par sa compacité, sa simplicité et ses fonctionnalités.

La compacité du mécanisme est réalisée principalement par combinaison des moyens d'articulation du panneau mobile en position d'entrebâillement avec les moyens de coulissement de celui-ci et par regroupement de ces moyens dans une glissière de coulissement longitudinal.

Par ailleurs, les fonctionnalités du mécanisme sont assurées par une commande unique du fait de la polyvalence des composants du mécanisme.

Cette invention concerne donc un mécanisme d'ouverture, de fermeture et d'entrebâillement d'un panneau mobile par rapport à une surface fixe, notamment pour toit ouvrant de véhicule automobile, du type comportant un support sur lequel est fixé le panneau mobile et des moyens de guidage et d'articulation du support mobiles en translation dans une glissière fixée à la surface fixe, caractérisé en ce que ladite glissière est disposée sur le dessus de la surface fixe et présenter à son extrémité avant un tronçon incliné et en ce que ledit support est monté à articulation à son extrémité avant sur un axe, mobile en translation dans une glissière, la partie terminale dudit tronçon incliné servant d'appui à l'axe notamment en position entrebâillée du panneau mobile.

Selon une caractéristique préférentielle de l'invention, le mécanisme comprend un moyen de verrouillage de l'axe du support qui est commandé par lesdits moyens de guidage et d'articulation du support pour bloquer la course de l'axe dans la glissière notamment en position entrebâillée du panneau mobile.

Selon encore une autre caractéristique de l'invention, lesdits moyens de guidage en coulissement du support sont constitués d'un chariot central mobile en translation dans la glissière et portant un premier tenon de guidage, un premier chemin de guidage aménagé dans le support dans lequel coulisse ledit premier tenon de guidage et un moyen de commande du chariot central pour commander son déplacement en translation dans la glissière.

Le moyen de verrouillage de l'axe d'articulation du support est constitué d'un levier monté à articulation sur cet axe et présentant un doigt s'accouplant à une zone aménagée de la glissière, ledit levier comportant un second chemin de guidage dans lequel se déplace un second tenon de guidage porté par le chariot.

Les différents organes du mécanisme sont alignés dans le sens longitudinal de la glissière.

Le support comporte un doigt venant en appui sur une face de la glissière lors du coulissement du panneau mobile au-dessus de la surface fixe.

Le chariot est prolongé, à une de ses extrémités, par un doigt et le support comporte à sa seconde extrémité, une protubérance de sorte que ledit doigt vient se bloquer en appui au-dessous de la protubérance en position de fermeture du panneau mobile.

La glissière est maintenue par au moins une fixation à un contre-cadre placé au-dessous de la surface fixe, ledit contre-cadre comportant une partie faisant saillie dans la zone évidée de la surface fixe.

Un premier joint périphérique d'étanchéité est fixé au-dessus de la partie faisant saillie, et un second joint d'étanchéité est fixé sur la périphérie les bords de d'ouverture de la surface fixe.

L'invention est exposée ci-après plus en détail à l'aide de dessins représentant seulement un mode d'exécution.

La figure 1 représente une vue de côté en coupe longitudinale du mécanisme installé, le panneau mobile étant en position de fermeture.

La figure 2 représente une vue analogue à celle de la figure 1, le panneau mobile étant en position entrebâillée.

La figure 3 représente une vue analogue à celle de la figure 1, le panneau mobile étant en position de départ avant son coulissement.

La figure 4 représente une vue analogue à celle de la figure 1, le panneau mobile étant en position de recul au-dessus de la surface fixe.

La figure 5 représente une vue éclatée de l'ensemble du mécanisme selon l'invention.

La figure 6 représente une vue selon la coupe A-A de la figure 5.

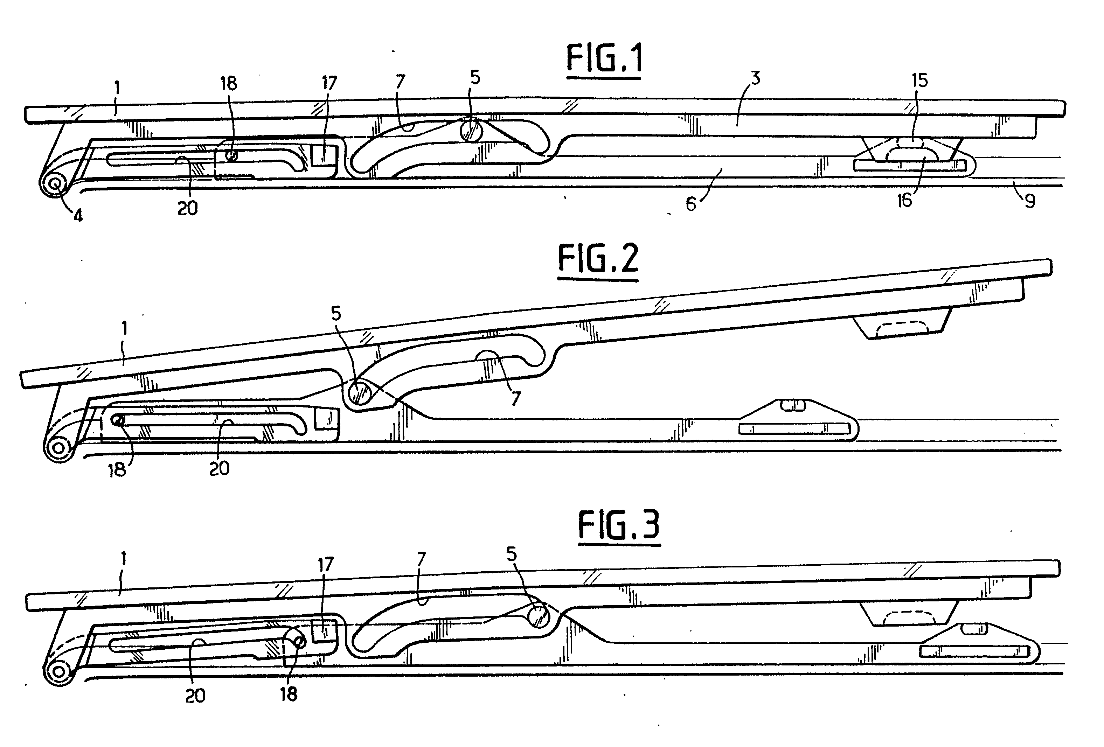

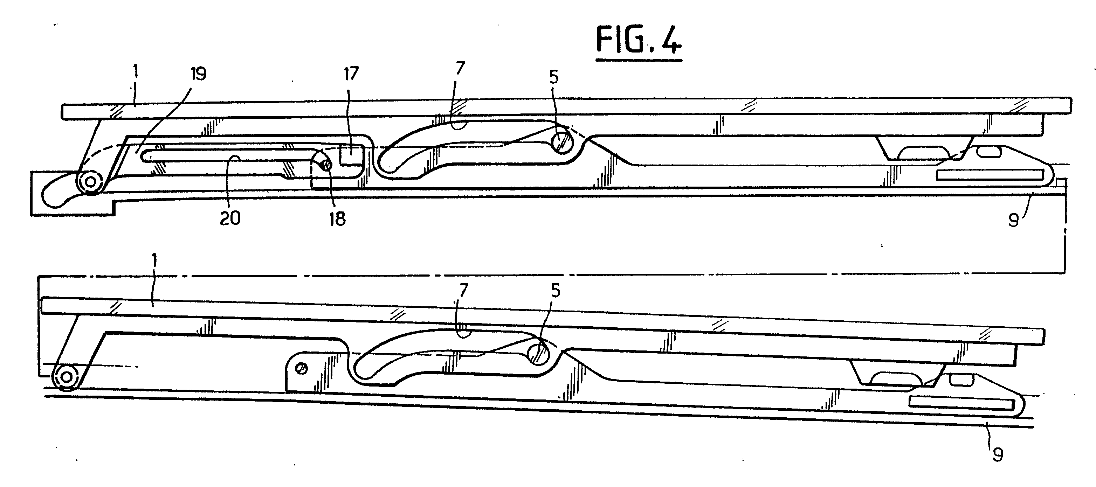

Le mécanisme conforme à l'invention permet de donner à un panneau mobile 1, une position de fermeture (figure 1), une position dite d'entrebâillement (figure 2), et une position dite d'ouverture dont les figures 3 et 4 représentent les différentes étapes de déplacement, le panneau 1 étant translaté vers l'arrière au-dessus de la paroi fixe dans une position sensiblement parallèle à celle-ci.

Deux mécanismes symétriques sont installés sur les deux côtés longitudinaux de l'ouverture, ces deux mécanismes fonctionnant de manière synchrone.

Le panneau mobile 1, constitué en tôle ou en verre, par exemple, est fixé par collage ou analogue sur un support 3, le support 3 étant monté à articulation, à son extrémité avant, sur un axe 4.

L'axe 4 est mobile en translation dans une glissière 2, grâce à des galets d'entraînement 24 par exemple. La glissière 2 est fixée sur le dessus de la surface fixe 9, sensiblement à proximité des bords longitudinaux de l'ouverture.

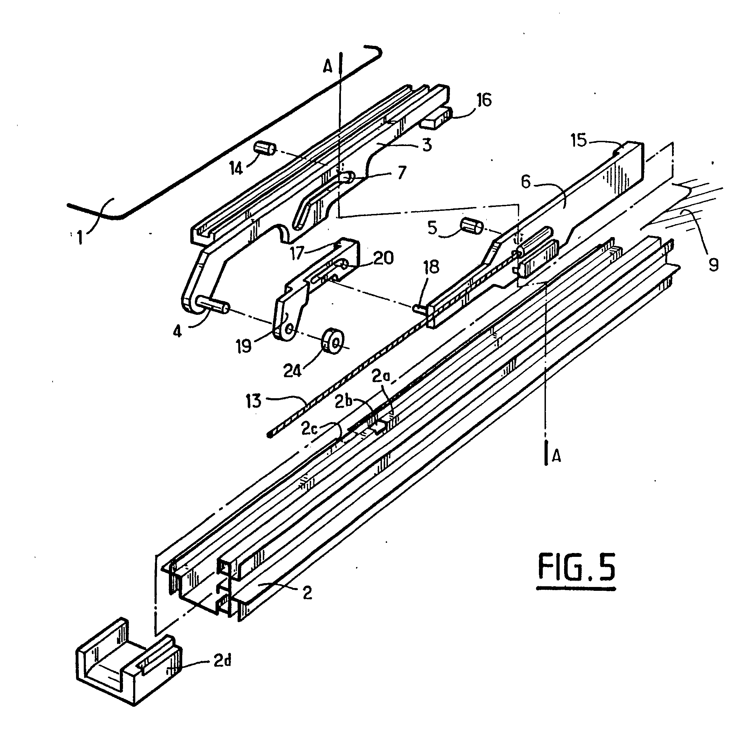

Le support 3 est relié à un chariot central 6 mobile en translation dans la glissière 2. Le support 3, dont la longueur est sensiblement inférieure au côté longitudinal du panneau mobile 1, comporte un premier chemin de guidage 7 dans lequel se déplace un premier tenon de guidage 5 porté par le chariot 6. Le chariot 6 est commandé par un câble 13, comme visible en figure 5, lequel est relié à une manivelle ou à un moteur électrique, par exemple, permettant d'appliquer au chariot 6 un mouvement en translation dans la glissière 2 vers l'avant ou vers l'arrière. Le déplacement des chariots des mécanismes symétriques selon l'invention, se fait de manière synchrone et dans le même sens.

Le chemin de guidage 7 comporte un premier tronçon sensiblement incliné vers le haut, suivi d'un tronçon horizontal et terminé par un tronçon incliné vers le bas. En position de fermeture du panneau mobile le tenon de guidage 5 est positionné sensiblement dans la zone centrale du tronçon horizontal du chemin de guidage 7 comme visible en figure 1. Le déplacement du chariot 6 vers l'avant, c,est à dire en direction de l'axe 4, positionne le tenon de guidage 5 dans le premier tronçon incliné vers le haut du chemin de guidage 7, ce qui provoque un déplacement vertical vers le haut du support 3 permettant l'entrebâillement du panneau mobile 1. De façon préférentielle, la hauteur du mécanisme selon l'invention est limitée à la hauteur du chariot 6 au niveau du tenon de guidage 5.

Afin d'éviter le recul du panneau mobile 1 en position d'entrebâillement, notamment lors du déplacement du véhicule, un levier 19 monté à articulation sur l'axe 4 bloque la course de ce dernier dans la glissière 2.

De façon préférentielle, le levier de verrouillage 19 est superposé en partie au support 3. Le levier 19 comporte un second chemin de guidage 20 constitué d'un premier tronçon horizontal et d'un second tronçon incliné vers le bas. Un second tenon de guidage 18 porté par le chariot 6 coulisse dans ce chemin de guidage 20 de sorte qu'il applique un mouvement vertical autour de l'axe 4 au levier 19. Le levier 19 présente un doigt 17 s'accouplant avec une zone 2c aménagée dans la glissière 2.

En position d'entrebâillement ou de fermeture du panneau mobile 1, comme visible en figures 1 et 2, le tenon de guidage 18 est positionné dans le premier tronçon horizontal du chemin de guidage 20, de sorte que le doigt 17 du levier 19 est accouplé avec la zone évidée 2c de la glissière 2, bloquant ainsi la course en translation de l'axe 4 dans la glissière 2. De cette manière, le panneau mobile, même en position entrebâillée, ne peut pas reculer.

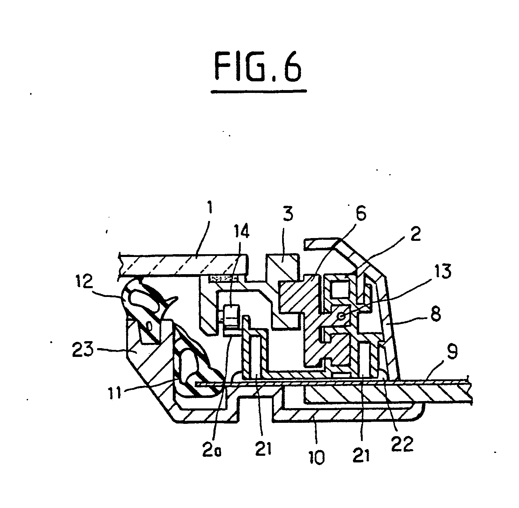

Lorsque le chariot 6 est déplacé vers l'arrière, les deux tenons de guidage 5, 18, se positionnent respectivement dans les tronçons inclinés vers le bas des chemins de guidage 7, 20. Sous l'action de ce déplacement, le support 3 s'incline sensiblement vers le haut en même temps que le levier 19 de verrouillage se désaccouple de la glissière 2. Les différents éléments du mécanisme, support 3, chariot 6, levier de blocage 19, câble 13, sont alignés dans le sens longitudinal de la glissière 2, de sorte que l'ensemble du mécanisme est centralisé dans la glissière 2. De façon préférentielle, on peut prévoir une finition 8 fixée à la glissière 2, venant camoufler le mécanisme jusqu'à la base du pavillon 9, comme visible en figure 6. L'ensemble du mécanisme est maintenu en position sur la surface fixe 9 par un contre-cadre 10 placé en dessous de celle-ci et relié à la glissière 2 par des fixations 21. De façon préférentielle, le contre-cadre 10 servira de finition intérieure. Le contre-cadre 10 comporte une partie faisant saillie 23 dans la zone évidée de la surface fixe 9. Un joint périphérique 12 assurant l'étanchéité à l'air et à l'eau du panneau mobile 1 est fixé sur le dessus de la partie faisant saillie 23. En position de fermeture du panneau mobile 1, ce dernier prend appui sur le joint 12. Un second joint périphérique posé sur la périphérie de l'ouverture pratiquée dans la surface fixe 9, assure l'étanchéité à l'eau de l'ensemble du dispositif d'ouverture de toit.

Avant le coulissement vers l'arrière du panneau mobile 1, celui-ci doit pouvoir se soulever de quelques millimètre de manière à éviter son frottement sur le joint d'étanchéité 12. La glissière 2 comporte à son extrémité avant, un tronçon incliné 2d d'un dénivelé de quelques millimètres, par exemple 4 mm, la partie terminale de ce tronçon 2d servant d'appui à l'axe 4 notamment en position d'entrebâillement du panneau mobile 1. Sous l'action du déplacement vers l'avant du chariot 6 comme décrit précédemment, l'axe 4 entraîné par le support 3 est soulevé par rapport à sa position précédente, lors de sa translation, dans le tronçon incliné 2d de la glissière 2, de sorte qu'après ce début de recul, le panneau mobile 1 se présente sensiblement surélevé par rapport au plan défini par le bord supérieur du joint d'étanchéité 12 tout en restant parallèle à la surface fixe 9.

Afin d'éviter que le panneau mobile ne redescende pendant son coulissement depuis une position d'ouverture vers une position de fermeture, notamment sous l'action du déplacement du galet 5 dans le chemin de guidage 7, on prévoit un doigt 14 porté par le support 3, ledit doigt 14 prenant appui sur une face 2a de la glissière 2 pendant le coulissement du panneau mobile 1. Lorsque l'axe 4 arrive en fin de course dans la glissière 2, c'est à dire dans la partie terminale 2d du tronçon incliné de celle-ci, le doigt 14 se présente en face d'une zone évidée 2b de la face 2a de la glissière 2, dans laquelle redescend le doigt 14, ce qui permet la fermeture du panneau mobile 1.

Le chariot 6 est prolongé, à son extrémité arrière, par un doigt 15 tandis que le support 3 comporte, à son extrémité arrière, une protubérance 16 de sorte qu'en position de fermeture du panneau mobile 1, le doigt 15 vient se bloquer en appui au-dessous de la protubérance 16, comme visible en figure 1, ce qui permet d'éviter le soulèvement du panneau mobile dans sa partie arrière sous l'action de la dépression aérodynamique, notamment lors du déplacement à haute vitesse du véhicule. Par ailleurs, l'enclenchement du doigt 15 sur la protubérance 16 maintient l'ensemble panneau mobile 1 et support 3 dans l'axe vertical.

De façon préférentielle, on assure l'étanchéité, notamment à l'eau, au niveau des fixations 21 de la glissière 2 sur la surface fixe 9, par un film 22 placé entre ces deux derniers éléments.

Le mécanisme décrit permet donc un coulissement parallèle du panneau mobile au-dessus de la surface fixe, une ouverture complète et un entrebâillement du panneau mobile sans encombrement dans l'habitacle. L'ensemble de ces fonctionnalités est réalisé par une seule commande centrale.

Bien entendu, l'invention n'est pas limitée à l'exemple de réalisation ci-dessus décrit et on pourra facilement prévoir d'autres variantes de réalisations sans pour cela sortir du cadre de l'invention.

## Revendications

1 - Mécanisme d'ouverture, de fermeture et d'entrebâillement d'un panneau mobile (1) par rapport à une surface fixe (9), notamment pour toit ouvrant de véhicule automobile, du type comportant un support (3) sur lequel est fixé le panneau mobile et des moyens de guidage (5, 6, 7) et d'articulation du support (3) mobiles en translation dans une glissière (2) fixée à la surface fixe (9), caractérisé en ce que ladite glissière (2) est disposée sur le dessus de la surface fixe (9) et présente, à son extrémité avant un tronçon incliné (2D) et en ce que ledit support (3) est monté à articulation à son extrémité avant sur un axe (4), mobile en translation dans la glissière (2), la partie terminale dudit tronçon incliné (2D) servant d'appui à l'axe (4) notamment en position entrebâillée du panneau mobile (1).

2 - Mécanisme selon la revendication 1, caractérisé en ce qu'il comprend un moyen de verrouillage (17, 19, 20) de l'axe (4) du support (3) qui est commandé par lesdits moyens de guidage et d'articulation du support pour bloquer la course de l'axe (4) dans la glissière (2) notamment en position entrebâillée du panneau mobile (1).

3 - Mécanisme selon les revendications 2, caractérisé en ce que lesdits moyens de guidage et d'articulation du support sont constitués d'un chariot central (6) mobile en translation dans la glissière (2) et portant un premier tenon de guidage (5), un premier chemin de guidage (7) aménagé dans le support (3) dans lequel coulisse ledit premier tenon de guidage et un moyen de commande (13) du chariot central pour commander son déplacement en translation dans la glissière (2).

4 - Mécanisme selon les revendications 2 et 3, caractérisé en ce que ledit moyen de verrouillage de l'axe (4) est constitué d'un levier (19) monté à articulation sur l'axe (4) et présentant un doigt (17) s'accouplant avec une zone (2c) aménagée de la glissière (2), ledit levier (19) comportant un second chemin de guidage (20) dans lequel se déplace un second tenon (18) porté par le chariot (6).

5 - Mécanisme selon l'une quelconque des revendications 3 ou 4, caractérisé en ce que le moyen de commande (13) commande simultanément l'actionnement du moyen de verrouillage et le coulissement du support (3).

6 - Mécanisme selon l'une quelconque des revendications précédentes, caractérisé en ce que le support (3) comporte un doigt (14) venant en appui sur une face (2a) de la glissière (2) lors du coulissement du panneau mobile (1) au-dessus de la surface fixe (9).

7 - Mécanisme selon l'une quelconque des revendications précédentes, caractérisé en ce que le chariot (6) est prolongé, à une de ses extrémités, par un doigt (15), en ce que le support (3) comporte à une de ses extrémités, une protubérance (16), ledit doigt (15) venant se bloquer en appui au-dessous de la protubérance (16) en position de fermeture du panneau mobile (1).

8 - Mécanisme selon l'une quelconque des revendications précédentes, caractérisé en ce que la glissière (2) est maintenue par au moins une fixation (21) à un contre-cadre (10) placé au-dessous de la surface fixe (9), ledit contre-cadre (10) comportant une partie faisant saillie (23) dans la zone évidée de la surface fixe (9).

9 - Mécanisme selon la revendication 9, caractérisé en ce qu'un joint périphérique d'étanchéité (12) est fixé au-dessus de la partie faisant saillie (23) et un joint d'étanchéité (11) est fixé sur la périphérie des bords de l'ouverture de la surface fixe (9).

## FIG.1

## FIG.2

## FIG.3

EP 0 403 388 A1

# FIG. 4

EP 0 403 388 A1

FIG.5

# FIG.6

Office européen
des brevets
Numero de la demande

# RAPPORT DE RECHERCHE EUROPEENNE

EP 90 40 1655

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | DE-A-3 504 572 (KARROSERIEWERKE WEINSBERG) <br> * Page 13, lignes 10-24; figure 3 * <br> --- | 1,3 | B 60 J 7/05 |
| D,Y | DE-C-3 529 118 (OPEL) <br> * Colonne 3, ligne 45 - colonne 5, ligne 38; figures 1-3 * <br> --- | 1,3 | |
| A | US-A-4 342 482 (KORAL) <br> * Colonne 4, ligne 36 - colonne 5, ligne 9; figures 1-3 * <br> --- | 1 | |
| A | FR-A-2 467 094 (NISSAN) <br> * Page 5, lignes 21-37; figure 8 * <br> --- | 1,2,3,4 ,5 | |
| A | EP-A-0 317 730 (WEBASTO) <br> * Colonne 7, lignes 23-41; figure 1 * <br> ----- | 8,9 | |

| DOMAINES TECHNIQUES RECHERCHES (Int. Cl.5) |
|---|
| B 60 J |

Le présent rapport a été établi pour toutes les revendications

| Lieu de la recherche | Date d'achèvement de la recherche | Examinateur |
|---|---|---|
| LA HAYE | 18-09-1990 | FOGLIA A. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)